**Europäisches Patentamt**

**European Patent Office**

**Office européen des brevets**

(19)

(11) Veröffentlichungsnummer: **0 124 537**
**B1**

# (12) EUROPÄISCHE PATENTSCHRIFT

(45) Veröffentlichungstag der Patentschrift:
**14.05.86**

(21) Anmeldenummer: **83903165.5**

(22) Anmeldetag: **27.10.83**

(86) Internationale Anmeldenummer:
**PCT/CH 83/00119**

(87) Internationale Veröffentlichungsnummer:
**WO 84/01872 (10.05.84 Gazette 84/12)**

(51) Int. Cl.⁴: **H 04 N 5/33**, G 01 J 5/60,
G 08 B 13/18

(54) **VERFAHREN ZUR UEBERWACHUNG EINES OBJEKTRAUMES.**

(30) Priorität: **02.11.82 CH 6357/82**

(43) Veröffentlichungstag der Anmeldung:
**14.11.84 Patentblatt 84/46**

(45) Bekanntmachung des Hinweises auf die Patenterteilung:
**14.05.86 Patentblatt 86/20**

(84) Benannte Vertragsstaaten:
**AT DE FR GB NL SE**

(56) Entgegenhaltungen:
**FR - A - 1 592 870**
**US - A - 3 258 529**

(73) Patentinhaber: **GX-HOLDING AG., Aeschengraben 6,
CH-4000 Basel (CH)**

(72) Erfinder: **JAEGER, Walter, Bel Bosco, CH-6951 Cureglia
(CH)**

(74) Vertreter: **Werffeli, Heinz R., Dipl.-Ing.,
Postfach 275 Waldgartenstrasse 12,
CH-8125 Zürich-Zollikerberg (CH)**

EP 0 124 537 B1

# Beschreibung

Die Erfindung betrifft ein Verfahren zur Überwachung eines Objektraumes, bei dem man die thermische Infrarotstrahlung des Objektraumes mittels eines Infrarot-Objektivs auf mindestens einem infrarotempfindlichen Detektor abbildet, durch wiederholte Abtastung dieser Abbildung eine elektrische Signalfolge bildet, und die letztere auf einem Fernsehmonitor als Abbild des Objektes wiedergibt.

Aus der FR-A-1 592 870 ist bereits ein Verfahren zur Überwachung eines Objektraumes bekannt, bei dem man den Objektraum auf zwei verschiedenen, eine voneinander unterschiedliche spektrale Empfindlichkeitscharakteristik aufweisenden Detektoren, von denen einer infrarotempfindlich ist, abbildet, und diese Abbildungen zur Bildung zweier Signalfolgen wiederholt abtastet. Zur besseren Sichtbarmachung des Infrarotbildes wird eine dieser beiden Signalfolgen in einer ersten und die andere in einer anderen zweiten Farbe auf dem Fernsehmonitor wiedergegeben. Derart erzeugte Bilder sind jedoch insbesondere bei Dunkelheit bzw. schlechten Sichtverhältnissen im allgemeinen sehr kontrastarm und besitzen eine nur mässige Schärfe. Kleine Objektbewegungen im überwachten Objektraum werden daher von einem Beobachter eines derart erzeugten Bildes selbst bei sehr anstrengender erhöhter Aufmerksamkeit häufig übersehen.

Aufgabe der vorliegenden Erfindung ist die Schaffung eines Verfahrens, welches diese Nachteile nicht aufweist, indem Objektbewegungen zu einer Veränderung der Farbdeckung im erzeugten Bild, und damit zu einer deutlich besseren Erkennbarkeit führen.

Diese Aufgabe wird bei einem Verfahren der eingangs genannten Art erfindungsgemäss dadurch gelöst, dass man die dabei verwendete Signalfolge einerseits direkt in einer bestimmten Farbe und anderseits zeitlich verzögert in einer anderen Farbe auf dem Fernsehmonitor als Abbild des Objektes wiedergibt.

Zweckmässige Witerausgestaltungen des erfindungsgemässen Verfahrens sind Gegenstand der Ansprüche 2 bis 5.

Nachstehend wird die Erfindung anhand der Zeichnung beispielsweise erläutert. Es zeigt:

Fig. 1 schematisch eine erste beispielsweise Anordnung zur Durchführung des erfindungsgemässen Verfahrens,

Fig. 2 schematisch eine zweite beispielsweise Anordnung zur Durchführung des erfindungsgemässen Verfahrens,

Fig. 3 schematisch eine dritte beispielsweise Anordnung zur Durchführung des erfindungsgemässen Verfahrens,

Fig. 4 bis 9 verschiedene Kombinationen von infrarotempfindlichen Detektoranordnungen mit den zugeordneten Abtastanordnungen und möglichen Filter- und Bildteilerkombinationen.

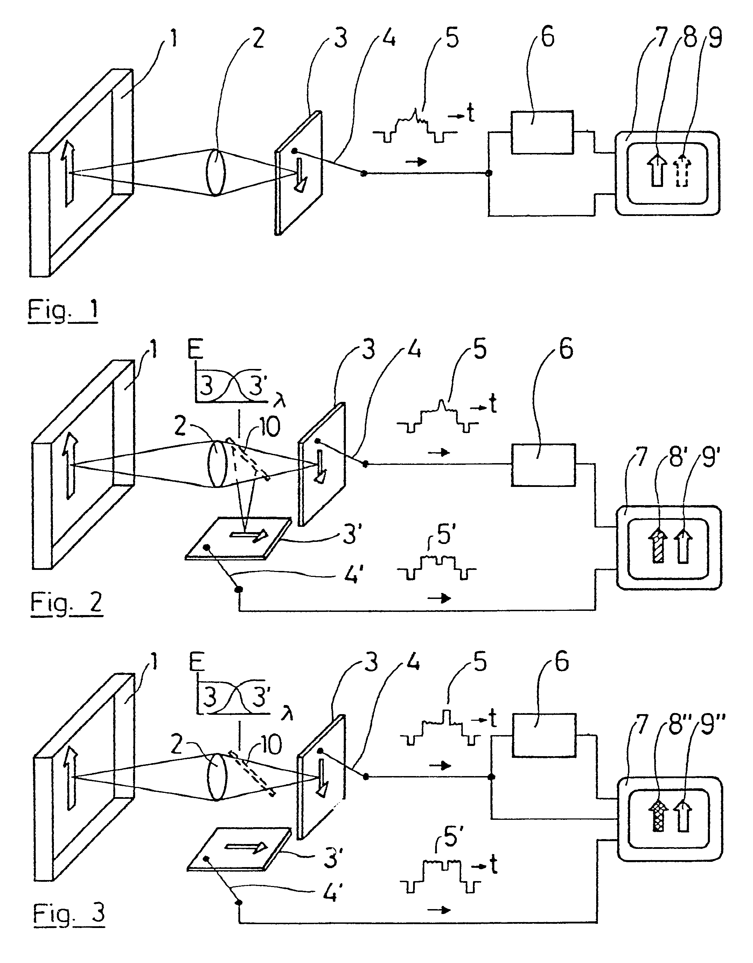

Wie aus Fig. 1 ersichtlich, wird der Objektraum 1 mittels eines Infrarotobjektivs 2 in einer Bildebene 3 abgebildet. Die Bildebene 3 wird mittels der Abtastvorrichtung 4 zeilen- und bildweise fernsehmässig wiederholt abgetastet und erzeugt so eine Signalfolge 5. Die Signalfolge 5 entspricht einer Umwandlung der geometrischen Bildinformation in eine zeitliche Information.

Die zeitliche Information 5 wird einerseits direkt und anderseits über eine Verzögerungsanordnung 6 auf einen zweifarbig arbeitenden Farbfernsehmonitor 7 geleitet.

Eine ruhende Bildvorlage 1 wird dabei so wiedergegeben, dass sich die Signalfolge 5 die direkt weitergeleitet wird, als ein Bild wiedergegeben wird, das sich mit dem Bild der über die Verzögerungsanordnung 6 geleiteten Signalfolge deckt. An sich werden aber die beiden Signalfolgen durch zwei verschiedene Signalfolgen wiedergegeben und die sich deckende Wiedergabe des Bildes entspricht daher für ein ruhendes Bild der Mischung der zwei farbigen Bilder.

Die Verhältnisse ändern sich, sobald ein Teil des Bildes sich bewegt, da dann die bewegten und die ruhenden Teile verschiedene Farben aufweisen, da die einerseits direkt und anderseits über die Verzögerungsanordnung 6 übertragene Signalfolge 5 auf dem Farbmonitor 7 nicht mehr zur Deckung miteinander gebracht werden und so als verschiedenfarbige Bilder 8 und 9 erscheinen.

In den Fig. 2 und 3 sind zu Fig. 1 analoge Teile mit den gleichen Überweisungszeichen versehen.

Zusätzlich ist jedoch eine spektrale Bildteilung 10 vorgesehen, die bewirkt, dass das Strahlenbündel das die Abbildung 3 erzeugt, aufgespalten wird, so dass die Abbildungen 3 und 3' verschiedenen Spektralbereichen der Objektstrahlung entsprechen.

Die beiden verschiedenen Spektralbereichen entsprechenden Abbildungen 3 und 3' werden mittels der Abtastvorrichtungen 4 und 4' in zwei Signalfolgen 5 und 5' umgewandelt und die eine Signalfolge 5 über die Verzögerungsanordnung 6 und die andere Signalfolge 5' direkt dem Farbmonitor 7 zugeleitet. Das Bild 8' eines ruhenden Objektes wird durch die Aufspaltung des Spektralbereiches mittels der spektralen Bildteilung 10 verändert, indem nun spektral verschieden strahlende Objekte auch ohne Bewegung verschiedenfarbig wiedergegeben werden. Zudem wird ein bewegtes Objekt mit Farbsäumen oder verschiedenfarbig 9' verdeutlicht hervorgehoben.

In Fig. 3 wird im Gegensatz zu Fig. 2 die Signalfolge 5 nicht nur verzögert, sondern auch direkt wiedergegeben, und es werden die Signalfolgen 5, 5' und 5a als drei verschiedene Farben auf dem Farbmonitor 7 wiedergegeben. Das Bild erscheint daher ohne Bewegung in Farben die aus zwei Grundfarben bestehen, je nach der spektralen Emissionscharakteristik des Objektraumes, und es erscheint in Farben die aus drei Grundfarben bestehen, sobald Bewegung im Objektraum auftritt.

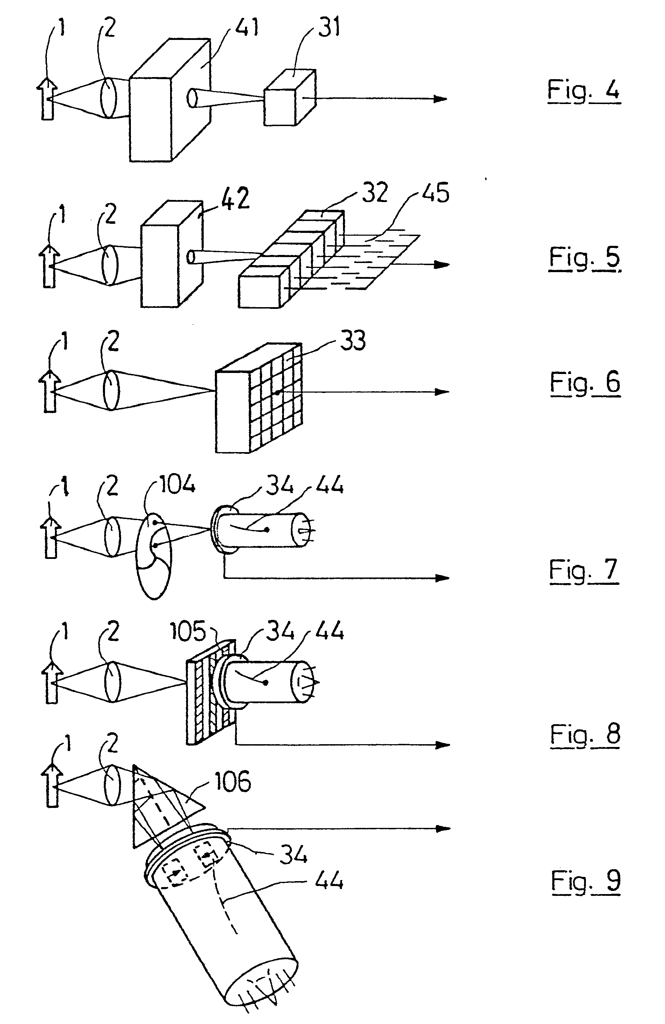

Fig. 4 zeigt die Verwendung einer Detektoranordnung 31, die einen einzelnen Bildpunkt wiedergibt. Die Bildabtastung erfolgt dabei mittels einer Spiegelanordnung 41 sowohl horizontal als auch vertikal.

Fig. 5 zeigt eine Detektoranordnung 32, die aus einer Anzahl Einzelelemente besteht je mit entsprechendem Schalter 45, die beispielsweise der Bildpunkte pro Zeile entsprechen. Die Abtastanordnung 42 arbeitet daher nur noch vertikal.

Fig. 6 zeigt eine mosaikartige Anordnung 33 der Detektorelemente und die gesamte Abtastung erfolgt durch elektronische Fortschaltung.

Fig. 7 zeigt ein grossflächiges Detektorelement 34 beispielsweise ein Pyrikon, und die Abtastung 44 erfolgt mittels eines Elektronenstrahls. Als Spektralbildteiler dient ein rotierendes Filterrad 104.

Fig. 8 zeigt eine Anordnung entsprechend Fig. 7, wobei aber der Spektralbildteiler durch ein Streifenfilter 105 ersetzt ist.

Fig. 9 zeigt eine Anordnung ähnlich Fig. 7, wobei aber der Spektralbildteiler aus einer Prismaanordnung 106 wie sie zum Beispiel in der US-PS 4,359,757 beschrieben ist, besteht.

## Patentansprüche

1. Verfahren zur Überwachung eines Objektraumes (1), bei dem man die thermische Infrarotstrahlung des Objektraumes (1) mittels eines Infrarot-Objektives (2) auf mindestens einem infrarotempfindlichen Detektor (3) abbildet, durch wiederholte Abtastung (4) dieser Abbildung eine elektrische Signalfolge (5) bildet, und die letztere auf einem Fernsehmonitor (7) als Abbild des Objektes wiedergibt, dadurch gekennzeichnet, dass man die dabei verwendete Signalfolge (5) einerseits direkt in einer bestimmten Farbe und anderseits zeitlich verzögert (6) in einer anderen Farbe auf dem Fernsehmonitor (7) als Abbild des Objektes wiedergibt.

2. Verfharen nach Anspruch 1, dadurch gekennzeichnet, dass man die verzögerte Signalfolge um mehrere Zeilenzeiten verzögert auf dem Fernsehmonitor (7) wiedergibt.

3. Verfahren nach Anspruch 1, dadurch gekennzeichnet, dass man die verzögerte Signalfolge um mehrere Halbbild- bzw. Bildzeiten verzögert auf dem Fernsehmonitor (7) wiedergibt.

4. Verfahren nach einem der Ansprüche 1 bis 3, wobei man den Objektraum (1) auf zwei verschiedenen, eine voneinander unterschiedliche spektrale Empfindlichkeitscharakteristik aufweisenden Detektoren (3, 3') abbildet, und diese Abbildungen zur Bildung zweier Signalfolgen (5, 5') wiederholt abtastet und eine (5,) dieser Signalfolgen direkt in einer bestimmten Farbe auf dem Fernsehmonitor (7) wiedergibt, dadurch gekennzeichnet, dass man die zweite Signalfolge (5) zeitlich verzögert in einer anderen Farbe auf dem Fernsehmonitor (7) wiedergibt.

5. Verfahren nach Anspruch 4, dadurch gekennzeichnet, dass man mindestens eine dieser Signalfolgen sowohl direkt in einer bestimmten Farbe als auch zeitlich verzögert auf dem Fernsehmonitor (7) wiedergibt.

## Claims

1. Method for the surveyance of an object space (1), in which the thermal infrared radiation of the object space (1) is projected by means of an infrared lens (2) as an image onto at least one infrared sensitive detector (3), forming a sequence of electrical signals (5) by repeatedly scanning said image and reproducing said signal sequence on a TV monitor (7) as an image of said object, characterized by reproducing the used signal sequence (5) on the one hand directly in one specific colour and on the other hand delayed in time (6) in another colour on the TV monitor (7) as an image of the object.

2. Method according claim 1, characterized by reproducing the delayed signal sequence delayed by several units of line time on the TV monitor (7).

3. Method according claim 1, characterized by reproducing the delayed signal sequence delayed by several units of half-picture resp. picture time on the TV monitor (7).

4. Method according one of the claims 1 to 3, wherein the object space (1) is projected onto two different detectors (3, 3') having different spectral sensitivity characteristics to produce two images, said two images being scanned repeatedly so as to form two sequences of signals (5, 5'), one (5') of said sequences being reproduced directly in one specific colour on the TV monitor (7), characterized by reproducing the second signal sequence (5), delayed by time, in another colour on the TV monitor (7).

5. Method according claim 4, characterized by reproducing at least one of said signal sequences directly in one specific colour as well as delayed in time on the TV monitor (7).

## Revendications

1. Procédé de surveillance d'un espace-objet (1), dans lequel on forme, au moyen d'un objectif (2) à infrarouge, l'image du rayonnement thermique infrarouge de l'espace-objet (1) sur au moins un détecteur (3) sensible aux infrarouges, l'on forme un train de signaux électriques (5) par exploration répétitive (4) de cette image formée, puis l'on reproduit ce train de signaux sur un moniteur vidéo (7), en tant qu'image de l'objet, procédé caractérisé par le fait que le train de signaux (5) qui est alors utilisé est reproduit sur le moniteur vidéo (7), en tant qu'image de l'objet, d'une part directement dans une couleur déterminée, et d'autre part dans une autre couleur, avec temporisation (6).

2. Procédé selon la revendication 1, caractérisé par le fait que le train de signaux temporisé est reproduit sur le moniteur vidéo (7) avec temporisation de plusieurs temps de lignes.

3. Procédé selon la revendication 1, caractérisé par le fait que le train de signaux temporisé est reproduit sur le moniteur vidéo (7) avec temporisation de plusieurs temps de demi-images ou d'images, respectivement.

4. Procédé selon l'une quelconque des revendications 1 à 3, dans lequel on reproduit l'espace-objet (1) sur deux détecteurs différents (3, 3') présentant des caractéristiques de sensibilité spectrale différentes pour l'un et pour l'autre, ces images formées étant explorées répétitivement afin d'engendrer deux trains de signaux (5, 5'), puis l'un (5') de ces trains de signaux est directement reproduit sur le moniteur vidéo (7) dans une couleur déterminée, procédé caractérisé par le fait que le second train de signaux (5) est reproduit sur le moniteur vidéo (7) dans une autre couleur et avec temporisation.

5. Procédé selon la revendication 4, caractérisé par le fait qu'au moins l'un desdits trains de signaux est reproduit sur le moniteur vidéo (7), à la fois directement dans une couleur déterminée et également avec temporisation.

Fig. 1

Fig. 2

Fig. 3

Fig. 4

Fig. 5

Fig. 6

Fig. 7

Fig. 8

Fig. 9